# EUROPEAN PATENT SPECIFICATION

(11) **EP 3 907 458 B1**
(45) Date of publication and mention of the grant of the patent: **28.06.2023**
(21) Application number: 21172379.6
(22) Date of filing: 06.05.2021
(51) Int. Cl.: F28D 20/00

(54) **INTEGRATED HEATING AND THERMAL STORAGE UNIT, SET OF INTEGRATED HEATING AND THERMAL STORAGE UNITS AND METHOD FOR CONTROLLING THE SAME**
INTEGRIERTE HEIZ- UND THERMOSPEICHEREINHEIT, SET INTEGRIERTER HEIZ- UND THERMOSPEICHER UND VERFAHREN ZU DEREN STEUERUNG
UNITÉ INTÉGRÉE DE CHAUFFAGE ET DE STOCKAGE THERMIQUE, ENSEMBLE D'UNITÉS INTÉGRÉES DE CHAUFFAGE ET DE STOCKAGE THERMIQUE ET PROCEDE DE COMMANDE DE CELLES-CI

(30) Priority: 07.05.2020 PL 43389520
(43) Date of publication of application: 10.11.2021
(73) Proprietor: Praciak, Marek, 59-900 Zgorzelec (PL)
(72) Inventor: Praciak, Marek, 59-900 Zgorzelec (PL)
(74) Representative: Godlewski, Piotr

(56) References cited:
- EP-A1- 1 408 291
- WO-A1-2011/069263
- WO-A1-2019/175646
- CN-U- 204 460 785
- DE-U1-202014 000 378
- GB-A- 2 547 190
- NL-A- 6 609 685
- US-A- 1 369 900

## Description

The present invention relates to an integrated heating and thermal storage unit, a set of integrated heating and thermal storage units and a method for controlling a set of integrated heating and thermal storage units intended for central heating and central usable water systems. The objects of the present invention are applicable in heating and supplying usable warm water (u.w.w.) to residential and non-residential buildings.

One of the most important economic factors in the operation of residential and non-residential buildings is the cost of usable water heating. In order to improve the economics of maintaining the desired heat balance in buildings, in prior art, on the one hand, there is a systematic trend of raising energy efficiency standards in construction, and on the other hand, new, more efficient heating systems for heating objects and central usable water are being developed. One of the more efficient and modern heating devices is the accumulation boiler. This type of device usually operates in three operating modes: continuous and charging, continuous and discharging, and cyclic charging in the off-peak period (e.g. in Poland second-cheaper G12 tariff) and discharging in the remaining time only for the u.w.w. circuit in the summer. The charging mode of the heating device consists in converting electricity into heat energy and storing the heat energy from a heat source. In the case of electric heat sources, the charging mode of the heating device is carried out during the off-peak periods of the electricity consumption, i.e. night and afternoon, in which the electricity cost is reduced. When the accumulation boiler is fully charged, the power supply is cut off and the heating device enters a discharging mode, in which the accumulated heat energy is transferred to the environment. Thanks to the heat energy accumulation capacity of the heating device, charging in cheaper energy tariffs (off-peak periods) allows for a significant reduction in the cost of heating buildings, including the cost of providing usable warm water.

EP2557372A1 discloses a heat accumulation device that comprises a heating element made of a ferromagnetic, located in a central location of the accumulation device, tightly surrounded by an accumulation material that stores heat. The accumulation material is non-ferromagnetic, due to which magnetic waves can penetrate it. The accumulation material element is surrounded by a spiral induction coil which, when connected to an external AC source, emits a magnetic field which results in the emission of heat energy from the heating element located inside the device. In addition, a conduit is passed through the accumulation material through which fluid flows, receiving accumulated heat, which results in it heating.

GB2493388A discloses a heat storage system and a solar collector. One of the components of the system is a heat accumulating device made of accumulating material. Heat energy, which is supplied to the accumulating material, is solar energy. Inside the accumulation device there is a conduit or a set of two conduits arranged in a spiral, inside which a medium flows, which is subjected to heating. The medium is heated as a result of transferring heat from the thermal storage mass to the conduit in which the medium is transported.

U.S. Patent US1369900A discloses a flow-through electric water heater. The device comprises a central pipe through which the heated medium flows. The liquid inlet is at the lower end of the pipe and the outlet is at the upper end. The central pipe is covered with an insulation coating that supports the resistance wire, spirally wound on the central pipe. The resistance wire is a part of the electrical circuit and serves as a heating element for heating the medium that flows inside the central pipe. The central tube and the wound resistance wire system is tightly surrounded by solid material that can heat up to the incandescent point temperatures.

The technical problem facing the present invention is to provide such an integrated heating and thermal storage unit and such a set of integrated heating and thermal storage units which are a universal, modular solution allowing for cooperation with existing central heating and usable warm water installations. It is also desirable to provide an integrated heating and thermal storage unit that allows for any combination and, at the same time, configuration in relation to the flow and heat capacity requirements of the target installation of the usable warm water. In addition, it is desirable to provide an integrated heating and thermal storage unit that allows for the accumulation of excess heat energy or obtaining it from the off-peak electrical energy period and putting it into operation on demand, with a significant reduction in transmission losses and shortening the operating time of heating devices powered from an external energy source. Moreover, it is desirable to provide an integrated heating and thermal storage unit, which is a reliable solution, with extended lifespan, while safe in terms of electricity as well as shock protection.

In one aspect, the present invention provides an integrated heating and thermal storage unit comprising a heating assembly and a thermal storage cell, characterized in that the heating assembly comprises a central pipe, on the outer surface of which a heating spiral is wound, which is surrounded by a solid thermal storage mass of the heating assembly, on the outer surface of which the heating assembly housing is arranged, while the thermal storage cell comprises a guide pipe surrounded by a solid thermal storage mass of the thermal storage cell, inside which the coil pipe extends, the heating assembly being introduced into an opening defined by the thermal storage cell guide pipe.

Preferably, an insulating layer is arranged between the central pipe and the heating spiral, constituting a fibreglass oilcloth soaked in Teflon.

Preferably, the inner dimension of the guide pipe and the outer dimension of the heating assembly housing are matched to provide a push fit.

Preferably, there is a lubricant between the heating assembly housing and the guide pipe, which is a silicone lubricant.

Preferably, the heating spiral is a metal flat bar.

Preferably, the coil pipe is a metal corrugated pipe.

Preferably, the thermal storage mass of the heating assembly and/or the thermal storage mass of the thermal storage cell is made of a mixture comprising concrete, kaolinite and magnesite.

Preferably, the thermal storage mass of the heating assembly and/or the thermal storage mass of the thermal storage cell is a mixture of B20 or B30 concrete in the amount of 50 wt% and kaolinite in the amount of 25 wt% and magnesite in the amount of 25 wt%.

In another aspect, the present invention provides an set of integrated heating and thermal storage units, comprising an input for connecting to the return connection from the medium circulation system and an output for connection to the supply connection of the medium circulation system, characterized in that it comprises at least two integrated heating and thermal storage units connected to each other as defined in the first aspect of the invention, wherein the integrated heating and thermal storage units are connected in series and/or in parallel and have, correspondingly, a flow output of the set connected to the central pipe of the integrated heating and thermal storage unit and an accumulation output of the set connected to the coil pipe of the integrated heating and thermal storage unit, wherein the flow output of the set and the accumulation output of the set are connected to form an output for connecting to the supply connection of the medium circulation system, wherein the input of the central pipe of the integrated heating and thermal storage unit is an input for connecting to the return connection from the medium circulation system.

Preferably, in a serial connection, the central pipes of the integrated heating and thermal storage units are connected in series and the coil pipes of the integrated heating and thermal storage units are connected in series, wherein an input of the central pipe of the first integrated heating and thermal storage unit being the input for connecting to the return connection of the medium circulation system, while an output of the central pipe of the last integrated heating and thermal storage unit is divided into two branches, the first branch being connected to the input of the coil pipe of the last integrated heating and thermal storage unit, and the second branch being the flow output of the set, the output of the coil pipe of the first integrated heating and thermal storage unit being the accumulation output of the set.

Preferably, in a parallel connection, the central pipes of the integrated heating and thermal storage units are connected in parallel and the coil pipes of the integrated heating and thermal storage units are connected in parallel, wherein the inputs of the central pipes of the integrated heating and thermal storage units are connected to form an input for connecting to the return connection of the medium circulation system, while the outputs of the central pipes of the integrated heating and thermal storage units are connected to a common output that is divided into two branches, the first branch being connected to the inputs of the connected coil pipe of the integrated heating and thermal storage units, and the second branch being a flow output of the set, wherein the outputs of the coil pipes of the integrated heating and thermal storage units are connected and constitute the accumulation output of the set.

Preferably, a flow valve is mounted at the flow output of the set, while an accumulation valve is mounted at the accumulation output of the set, and an input valve is mounted at the input of the set of integrated heating and thermal storage units.

Preferably, the flow valve and/or accumulation valve and/or input valve is an electronically controlled valve.

In a further aspect, the present invention provides a method for controlling a set of integrated heating and thermal storage units as defined in the second aspect of the invention, characterized in that for operation in the mode of direct medium heating, the flow output of the set is open and the accumulation output of the set is closed, for operation in the mode of accumulation heating or charging the thermal storage mass of the thermal storage cell, the flow output of the set is closed and the accumulation output of the set is open.

Preferably, closing and/or opening the flow output is implemented by closing and/or opening the flow valve, while closing and/or opening the accumulation output is implemented by closing and/or opening the accumulation valve.

The integrated heating and thermal storage unit according to the present invention is a universal and modular solution, which allows for cooperation with existing central heating and usable warm water installations, and at the same time provides the possibility of configuration in regard to the flow and heat capacity requirements of the target usable warm water installation.

The integrated heating and thermal storage unit, formed by the thermal storage cell together with the heating assembly, is a compensated, flow-through unit in which heat transfer losses in the connection installation have been eliminated (two devices in one). Thanks to this, the integrated heating and thermal storage unit automatically accumulates excess heat energy and automatically returns it, which creates full temperature stabilization of the device in the range of pre-set settings. In the integrated heating and thermal storage unit, the liquid medium (water) was replaced by a solid thermal storage mass, constituting a monolith with similar accumulation parameters to water (in relation to the mass). Moreover, in the present invention, charging of the thermal storage mass takes place just after attaching the heating assembly (heat charging, which the medium has not been able to receive during the flow) without losses in the heat supply to the central heating system on the transmission installation. Due to the properties of the thermal storage mass, the charging time of the thermal storage cell is much shorter than when using another boiler connected to a water buffer with the same thermal storage mass. This allows to achieve a significant reduction in electricity consumption than in traditional electric furnaces, c. h. boilers (shorter operating time of the heating element), stable maintenance of the heating medium temperature in the system, charging cells in the off-peak electrical energy periods with a higher charging temperature than in the peak electrical energy periods, automatic control of the set operation in the event of a change in the heat demand (cold aura - hot aura) without the use of control and regulation automation. Importantly, the thermal storage cell is a reliable solution with extended lifespan. There is no corrosion of metal elements and material fatigue as in the case of water buffers known in the art (change, pressure spikes in the system). Furthermore, the modular construction of the integrated heating and thermal storage unit of the present invention allows the devices to be seated in a room of any cubic capacity.

In addition, the use of the resistance flat bar winding on the outer surface of the central pipe is intended to increase the heat energy transfer surface area from the heating spiral that occurs along the entire circumference of the central pipe, as well as to increase the heat energy transfer temperature of the heating spiral to the flowing medium. As a result, the heating time of the flowing medium to the pre-set temperature was significantly reduced compared to heaters with the same power immersed directly in water.

Moreover, the thermal storage mass located on the outer surface of the heating spiral is intended to eliminate losses of the heat transferred to the environment, as well as to accumulate excess heat that has not been used to heat the medium during a given time and the systematic transfer of it during its flow, resulting in a shorter operating time of the heating spiral during operation in the central heating system.

Moreover, thanks to the use of an insulation layer, which is also characterized by high heat conductivity, improved safety in terms of electricity as well as shock protection was obtained.

The heating assembly is enclosed in a cylindrical housing made of a thin-walled pipe with a specified diameter and length, so that it is a replaceable element in the integrated heating and thermal storage unit.

It is worth mentioning that the integrated heating and thermal storage unit as well as the set of integrated heating and thermal storage units of the present invention provide operation at active power consumption. In addition, the object of the invention allows for the storage of heat energy at a high temperature (e.g. up to 95 °C) in a thermal storage element made of solid mass, which provides increased safety associated with the operation of the devices, thus eliminating, amongst others, the possibility of burning with warm water in the event of failure or leakage, as is the case in buffers and batteries in which there is a liquid medium. It is worth noting that the set of integrated heating and thermal storage units also allows for the accumulation of energy from alternative energy sources, such as photovoltaics, solar installations or windmills.

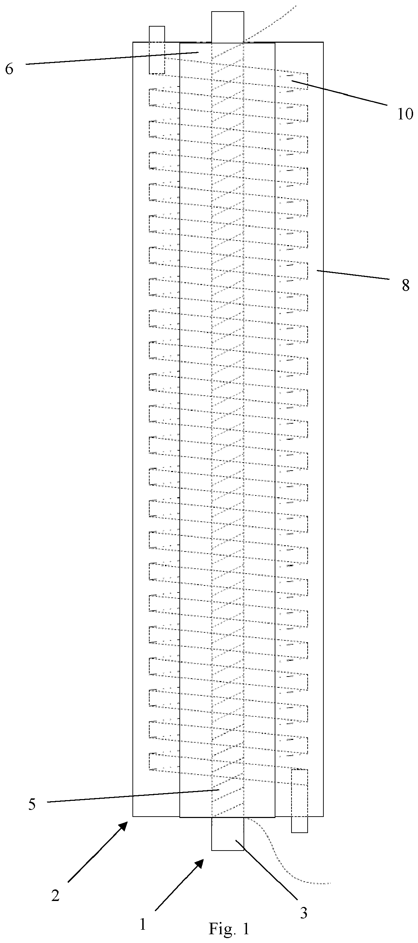

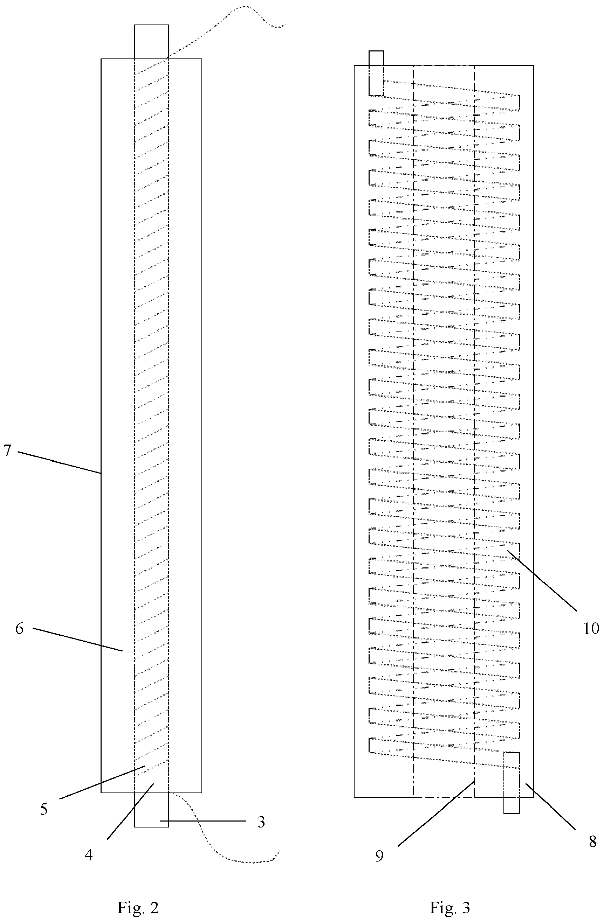

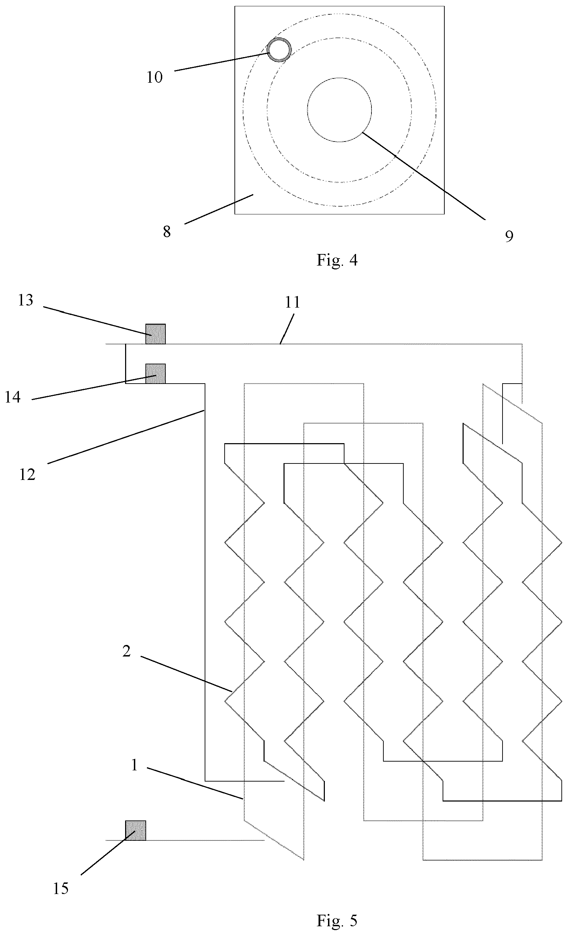

Examples of the invention are presented in the drawing, where Fig. 1 shows in a side view an embodiment of the integrated heating and thermal storage unit, Fig. 2 shows in a side view the heating assembly of the integrated heating and thermal storage unit of Fig. 1, Fig. 3 shows in a side view a thermal storage cell of the integrated heating and thermal storage unit of Fig. 1, Fig. 4 shows in a plan view the thermal storage cell of Fig. 3, while Fig. 5 schematically shows an embodiment of a set of integrated heating and thermal storage units of the present invention.

### Example 1

An embodiment of the integrated heating and thermal storage unit of the present invention is shown schematically in Fig. 1. In this embodiment, the integrated storage and heating unit includes two functionally and mechanically interconnected devices: heating assembly 1 and thermal storage cell 2. The construction of heating assembly 1 is shown schematically in Fig. 2, while the structure of the thermal storage cell 2 is shown schematically in Fig. 3 and 4.

Heating assembly 1 of Fig. 2 is an electrically powered device that operates in flow-through mode. The task of heating assembly 1 in the integrated heating and thermal storage unit of the present invention is to provide heat energy to the unit itself and to directly heat the medium flowing through it. The heating assembly 1 shown in Fig. 2 comprises a central pipe 3 through which the working medium of the target heating system flows. In the present embodiment, the medium is water, although this is not a limitation of the scope of the invention, and in alternative embodiments, other fluid heat energy receiving mediums such as oil or polypropylene glycol (used for example in central heating installations) may be used.

In the illustrated embodiment, the central pipe 3 used is a cylindrical structure made of metal - copper. In other embodiments, it is possible to use the central pipe 3 with a different cross-section, made of a material other than copper, provided that adequate flow, temperature resistance and high heat conductivity coefficient are ensured. Examples of suitable materials are steel or aluminium and their alloys.

The outer surface of the central pipe 3 of heating assembly 1 is covered with an insulation layer 4, constituting thermal and electrical insulation. The heating spiral 5 is wound on the insulation layer 4. The insulation layer 4 covers the outer surface of the central pipe 3 only in the heating spiral 5 region. In the present embodiment, the central pipe 3 has end regions that are not covered with an insulation layer 4 as well as a heating spiral 5. In the illustrated embodiment, the insulating layer 4 is a fibreglass oilcloth soaked in Teflon. The main purpose of the insulation layer 4 is to provide electrical insulation along with compensation for heat expansion of the material in direct contact with it, i.e. both the material of the central pipe 3 and the material of the heating spiral 5. The use of insulation layer 4 allows for avoiding short circuit in the heating assembly system 1, as well as prevents damage to the heating spiral 5, for example, by breaking it. As a result, thanks to insulation layer 4, heating assembly 1 is characterized by greater reliability and extended lifespan. The material of the applied insulation layer 4 does not limit the scope of the present invention, and in alternative embodiments, it is possible to use a material other than fibreglass oilcloth soaked in Teflon, provided that the desired features related to electrical insulation and compensation for temperature expansion are ensured.

The heating spiral 5 wound on the insulation layer 4 is an electrically powered resistance wire, which, as a result of providing electrical energy, increases its temperature, ensuring the supply of heat energy to the system. In the present embodiment, the heating spiral 5 is in the form of a flat bar which is tightly wound on the central pipe 3 (through the insulation layer 4). The flat bar of the heating spiral 5 is characterized by a relatively large width to thickness ratio, which allows to obtain a large heating surface area while maintaining electrical resistance, which provides the possibility of supplying with the pre-set supply voltage (and current) to obtain the desired electrical power causing heating of the heating spiral 5 to the temperature adjusted to the parameters of the applied insulation layer 4.

The outer surface of heating spiral 5 is surrounded by the thermal storage mass 6 of the heating assembly. In the present embodiment, the thermal storage mass 6 of the heating assembly is a hollow cylinder of defined dimensions (matched by the inner diameter to the outer diameter of the system, the central pipe 3 - insulation layer 4 - heating spiral 5), made of a solid mineral thermal storage mass based on concrete and minerals such as kaolinite, magnesite. However, the shape of the thermal storage mass 6 of the heating assembly is not limited to the hollow cylinder and in other embodiments may take the shape dependent on the geometrical requirements of the entire heating assembly 1 and the integrated heating and thermal storage unit. The purpose of the thermal storage mass 6 of the heating unit is to provide a significant improvement in the heat conductivity, as well as to eliminate losses of the heat transferred to the environment and to accumulate excess heat energy that has not been used to heat the medium during a given time. The heat energy accumulated in the thermal storage mass 6 of the heating assembly is then systematically emitted during the flow of the medium, resulting in a shorter operating time of the heating spiral 5 during operation in the central heating system. In the present embodiment, the material of thermal storage mass 6 of the heating assembly is B20 or B30 concrete in an amount of 50 wt% and kaolinite and magnesite in an amount of 25 wt% each. However, the material of the thermal storage mass 6 of the heating assembly does not limit the scope of the invention, and in alternative embodiments, it is possible to use another mixture of the thermal storage mass 6 of the heating assembly provided that the desired performance parameters such as heat capacity, temperature resistance or heat conductivity are ensured. In particular, it is desirable that the thermal storage mass 6 of the heating assembly exhibits accumulation parameters similar to the accumulation parameters of water relative to the mass.

On the outer surface of the thermal storage mass 6 of the heating assembly, the housing 7 of the heating assembly is arranged, which is a thin-walled steel pipe. The inner surface of the housing 7 of the heating assembly is adjacent directly to the outer surface of the thermal storage mass 6 of the heating assembly, and the length of the housing 7 of the heating assembly corresponds to the length of the thermal storage mass 6 of the heating assembly. Generally, the shape of the housing 7 of the heating assembly depends on the geometry of the thermal storage mass 6 of the heating assembly and the entire integrated heating and thermal storage unit, and in alternative embodiments may differ from the cylindrical shape.

In order to ensure accurate contact of the heating spiral 5 with the thermal storage mass 6 of the heating assembly, during the production of the heating assembly 1, after winding the heating spiral 5 on the insulation layer 4 covering the central pipe 3 and placing this system in the housing 7 of the heating assembly, the resulting empty space (corresponding to the thermal storage mass 6 of the heating assembly) is flooded in the mold with a fluid material of the thermal storage mass 6 of the heating assembly, after which such system is vibrated and compacted to obtain the greatest possible adhesion of the thermal storage mass 6 of the heating assembly to the heating spiral 5.

An embodiment of the thermal storage cell 2 included in the integrated heating and thermal storage unit of the present invention is shown schematically in Fig. 3 and 4.

Fig. 3 shows the thermal storage cell 2 in a side view, together with a schematic representation of the internal structures. The main building block element of the thermal storage cell 2 is the thermal storage mass 8 of the thermal storage cell, which in the present embodiment takes the form of a hollow cuboid. A guide pipe 9 (in the present embodiment - steel inox) is arranged in the inner bore of the thermal storage mass 8 of the thermal storage cell and has a cylindrical shape, while its inner diameter corresponds to the outer diameter of the housing 7 of the heating assembly. In this way, the heating assembly 1 can be inserted into the thermal storage cell 2 while maintaining proper dimensioning to ensure a push fit. It is worthwhile to note that the push fit is characterized by a high heat energy conductivity coefficient between the two elements thus connected. In alternative embodiments, the outer surface of the housing 7 of the heating assembly may be coated with a heat-conducting lubricant, such as silicone (or similar) grease, which provides easier insertion of the heating assembly 1, as well as improved adhesion and heat exchange between these elements. The heating assembly 1 is therefore a replaceable module which, for example, in the event of a need for different performance parameters or in the event of a failure, can be easily removed or replaced by another. The shape and geometry of the thermal storage mass 8 of the thermal storage cell is not limited to those shown in the present embodiment, and in alternative variants of the invention, the external dimensions and geometry may vary provided that they are functionally matched to the other components of the integrated heating and thermal storage unit. In particular, the outer shape of the thermal storage mass 8 of the thermal storage cell, constituting the outer shape of the entire thermal storage cell 2, may be adapted to the performance requirements of the integrated heating and thermal storage unit itself. In the present embodiment, the material of the thermal storage mass 8 of the thermal storage cell and the material of the thermal storage mass 6 of the heating assembly are identical. In alternative embodiments, these materials may differ in composition and performance parameters. Additionally, in other embodiments, the guide pipe 9 may be made of a material other than steel, provided that adequate temperature resistance as well as high heat conductivity coefficient are ensured.

In the thermal storage mass 8 of the thermal storage cell, a coil pipe 10 is arranged around the guide pipe 9, the inlet and outlet of which are drawn from the face surfaces of the thermal storage mass 8 of the thermal storage cell. The inlet of the coil pipe 10 is shown in a plan view of the thermal storage cell 2 in Fig. 4. A medium flows through the coil pipe 10 that ensures the transfer of heat energy to the thermal storage mass 8 of the thermal storage cell at the time of charging, as well as efficient reception of the accumulated heat energy at its discharge. In the present embodiment, the coil pipe 10 is formed out of a metal pipe, for example a steel one of up to a few or several meters in length, depending on the size of the integrated heating and thermal storage unit. To increase the heat transfer surface, the coil pipe 10 is formed out of a corrugated pipe, for example made of stainless steel. Both the material of the coil pipe 10 and its geometry as well as the number of coils in the thermal storage mass 8 of the thermal storage cell do not limit the scope of the present invention, and in alternative embodiments, the coil pipe 10 may be made of another material providing a good heat conductivity coefficient (such as copper), with or without a structured surface, with a greater or smaller number of coils.

Similarly, to ensure that the thermal storage mass 8 of the thermal storage cell adheres as closely as possible to the outer surface of the coil pipe 10, during production, the thermal storage mass 8 of the thermal storage cell in a fluid state is flooded into the mold in which the coil pipe 10 is located and then is vibrated and compacted.

The heating assembly 1 inserted into the thermal storage cell 2 form a single integrated heating and thermal storage unit of the present invention. The integrated heating and thermal storage unit thus created requires plugging in to the electrical supply for supplying the heating spiral 5 and for connecting the fluid supply network of the heating system, for example, a central heating system.

### Example 2

An embodiment of the set of integrated heating and thermal storage units of the present invention is shown schematically in Fig. 5. Generally, depending on the heat demand for a given central heating installation, the integrated heating and thermal storage units as shown in Example 1 are connected in parallel, in series or in a mixed manner. An important factor influencing the type of connection of integrated heating and thermal storage units is the flow diameter of the vertical-riser piping of the central heating installation in which the set of integrated heating and thermal storage units is to be used.

In practical implementations, the set of integrated heating and thermal storage units can provide power from approx. 0.9 kW and heat capacity of 2400 J x kg x 1°C, to any electrical power and heat capacity.

Fig. 5 shows a simplified scheme of a set of integrated heating and thermal storage units of the present invention. The set of integrated heating and thermal storage units is a system of two sections, each section comprising three integrated heating and thermal storage units of the present invention, such as the integrated heating and thermal storage units shown in Example 1.

In each section, the three integrated heating and thermal storage units are connected in series, i.e. the output of the central pipe 3 of the first integrated heating and thermal storage unit is connected to the input of the central pipe 3 of the second integrated heating and thermal storage unit, the output of which is connected to the input of the central pipe 3 of the third integrated heating and thermal storage unit. The sections thus formed are connected in parallel, providing increased medium flow.

Meanwhile, on the electrical side of the set of integrated heating and thermal storage units, the heating spirals 5 are connected in series or in parallel, according to the applied electrical voltage, e.g. 230V. When supplied with three-phase voltage, the heating spirals 5 may be combined into a star, triangle or zigzag.

As shown in Fig. 5, the return connection of the central heating system is connected to the input of the set of integrated heating and thermal storage units, wherein, through a branching known in the art , the medium is directed to the respective sections of the set such that the medium flows successively through three integrated heating and thermal storage units of each section, namely through their central pipes 3. The outputs (i.e. the outputs of the central tubes 3) of the last integrated heating and thermal storage unit of each section are connected to each other again by a manifold known in the art, forming a single flow output 11 of the segments. Subsequently, a single flow output of the segments is divided into two flows, one of which being directed respectively to two (through a known branching) coil pipes 10 of the last integrated heating and thermal storage unit in each section of the set. The coil pipes 10 in the integrated heating and thermal storage units of each section are connected in series with each other. The outputs of the coil pipes 10 of the first integrated heating and thermal storage units are interconnected and constitute a common accumulation output 12 of the set of integrated heating and thermal storage units of the present invention. The flow output 11 of the set of integrated heating and thermal storage units terminates in an electronically controlled flow valve 13, while the accumulation output 12 terminates in an electronically controlled accumulation valve 14. The valves used in the set are standard valves known in the art, and in alternative embodiments, it is possible to use valves without electronic control.

The outputs of both valves 13, 14 are interconnected to form a common output of the set of integrated heating and thermal storage units which is connected to the input connection of the central heating system. An additional input valve 15, also electronically controlled, is arranged at the input of the set of integrated heating and thermal storage units.

If the inlet valve 15 remains open, the medium from the usable warm water system may flow into the set of integrated heating and thermal storage units. The set has two modes of operation: direct heating operation mode and accumulation heating operation mode. In the first direct heating mode, the flow valve 13 remains open and the accumulation valve 14 remains closed. In this situation, the medium flows through the central pipes 3 of the integrated heating and thermal storage units and is heated directly by the heating spirals 5 of each unit. At this time, the thermal storage masses 6 are charged simultaneously by collecting the heat energy of the flowing heated medium. In the second accumulation heating mode, the flow valve 13 is closed and the accumulation valve 14 is open. In this situation, the medium flows through the central pipes 3 of the respective integrated heating and thermal storage units and further through the coil pipes 10 placed in the heat-charged thermal storage masses 8 of the thermal storage cells. Thanks to this, the medium is additionally heated by the heat accumulated in the integrated heating and thermal storage units. In the second operation mode, if the temperature of the medium at the output of the set of integrated heating and thermal storage units is too low, the heating spirals 5 are additionally activated for additional heating of the flowing medium. Closing both valves 13, 14 causes an emergency shutdown of the set of integrated heating and thermal storage units.

### List of references:

- 1 -: heating assembly
- 2 -: thermal storage cell
- 3 -: central pipe
- 4 -: insulation layer
- 5 -: heating spiral
- 6 -: thermal storage mass of the heating assembly
- 7 -: housing of the heating assembly
- 8 -: thermal storage mass of the thermal storage cell
- 9 -: guide pipe
- 10 -: coil pipe
- 11 -: flow output of the set
- 12 -: accumulation output of the set
- 13 -: flow valve
- 14 -: accumulation valve
- 15 -: input valve

## Claims

1. An integrated heating and thermal storage unit comprising a heating assembly (1) and a thermal storage cell (2), **characterized in that** the heating assembly (1) comprises a central pipe (3), on the outer surface of which a heating spiral (5) is wound, which is surrounded by a solid thermal storage mass (6) of the heating assembly, on the outer surface of which the housing (7) of the heating assembly is arranged, while the thermal storage cell (2) comprises a guide pipe (9) surrounded by a solid thermal storage mass (8) of the thermal storage cell, inside which a coil pipe (10) extends, the heating assembly (1) being introduced into an opening defined by the guide pipe (9) of the thermal storage cell (2).

2. The integrated heating and thermal storage unit according to claim 1, **characterized in that** an insulation layer (4) is arranged between the central pipe (3) and the heating spiral (5), constituting a fibreglass oilcloth soaked in Teflon.

3. The integrated heating and thermal storage unit according to claim 1 or 2, **characterized in that** the inner dimension of the guide pipe (9) and the outer dimension of the housing (7) of the heating assembly are matched to provide a push fit.

4. The integrated heating and thermal storage unit according to any of the claims 1 to 3, **characterized in that** there is a lubricant between the housing (7) of the heating assembly and the guide pipe (9), which is a silicone lubricant.

5. The integrated heating and thermal storage unit according to any of the claims 1 to 4, **characterized in that** the heating spiral (5) is a metal flat bar.

6. The integrated heating and thermal storage unit according to any of the claims 1 to 5, **characterized in that** the coil pipe (10) is a metal corrugated pipe.

7. The integrated heating and thermal storage unit according to any of the claims 1 to 6, **characterized in that** the thermal storage mass (6) of the heating assembly and/or the thermal storage mass (8) of the thermal storage cell is made of a mixture comprising concrete, kaolinite and magnesite.

8. The integrated heating and thermal storage unit according to claim 7, **characterized in that** the thermal storage mass (6) of the heating assembly and/or the thermal storage mass (8) of the thermal storage cell is a mixture of B20 or B30 concrete in the amount of 50 wt% and kaolinite in the amount of 25 wt% and magnesite in the amount of 25 wt%.

9. A set of integrated heating and thermal storage units, comprising an input for connecting to the return connection of the medium circulation system and an output for connecting to the supply connection of the medium circulation system, **characterized in that** it comprises at least two integrated heating and thermal storage units, as defined in any one of claims 1 to 8, connected to each other, wherein the integrated heating and thermal storage units are connected in series and/or in parallel and have, correspondingly, a flow output (11) of the set connected to the central pipe (3) of the integrated heating and thermal storage unit and an accumulation output (12) of the set connected to the coil pipe (10) of the integrated heating and thermal storage unit, wherein the flow output (11) of the set and the accumulation output (12) of the set are connected to form an output for connecting to the supply connection of the medium circulation system, wherein the input of the central pipe (3) of the integrated heating and thermal storage unit is an input for connecting to the return connection of the medium circulation system.

10. The set of integrated heating and thermal storage units according to claim 9, **characterized in that** in a serial connection, the central pipes (3) of the integrated heating and thermal storage units are connected in series and the coil pipes (10) of the integrated heating and thermal storage units are connected in series, wherein an input of the central pipe (3) of the first integrated heating and thermal storage unit being the input for connecting to the return connection of the medium circulation system, while an output of the central pipe (3) of the last integrated heating and thermal storage unit is divided into two branches, the first branch being connected to input of the the coil pipe (10) of the last integrated heating and thermal storage unit, and the second branch being the flow output (11) of the set, the output of the coil pipe (10) of the first integrated heating and thermal storage unit being the accumulation output (12) of the set.

11. The set of integrated heating and thermal storage units according to claim 9, **characterized in that** in a parallel connection, the central pipes (3) of the integrated heating and thermal storage units are connected in parallel and the coil pipes (10) of the integrated heating and thermal storage units are connected in parallel, wherein the inputs of the central pipes (3) of the integrated heating and thermal storage units are connected to form an input for connecting to the return connection of the medium circulation system, while the outputs the central pipes (3) of the integrated heating and thermal storage units are connected to a common output that is divided into two branches, the first branch being connected to the inputs of the connected coil pipes (10) of the integrated heating and thermal storage units, and the second branch being a flow output (11) of the set, wherein the outputs of the coil pipes (10) of the integrated heating and thermal storage units are connected and constitute the accumulation output (12) of the set.

12. The set of integrated heating and thermal storage units according to any of the claims 9 to 11, **characterized in that** a flow valve (13) is mounted at the flow output (11) of the set, while an accumulation valve (14) is mounted at the accumulation output (12) of the set, and an input valve (15) is mounted at the input of the set of integrated heating and thermal storage units.

13. The set of integrated heating and thermal storage units according to claim 12, **characterized in that** the flow valve (13) and/or accumulation valve (14) and/or input valve (15) is an electronically controlled valve.

14. A method for controlling the set of integrated heating and thermal storage units as defined in any one of claims 9 to 13, **characterized in that** for operation in the mode of direct medium heating, the flow output (11) of the set is open and the accumulation output (12) of the set is closed, for operation in the mode of accumulation heating or charging the thermal storage mass (8) of the thermal storage cell, the flow output (11) of the set is closed and the accumulation output (12) of the set is open.

15. The method for controlling the set of integrated heating and thermal storage units according to claim 14, **characterized in that** closing and/or opening the flow output (11) is implemented by closing and/or opening the flow valve (13), while closing and/or opening the accumulation output (12) is implemented by closing and/or opening the accumulation valve (14).

## Patentansprüche

1. Integrierte Heiz- und Thermospeichereinheit mit einer Heizanordnung (1) und einer Thermospeicherzelle (2), **dadurch gekennzeichnet, dass** die Heizanordnung (1) ein Zentralrohr (3) umfasst, auf dessen Außenfläche eine Heizspirale (5) aufgewickelt ist, die von einer festen Thermospeichermasse (6) der Heizanordnung umgeben ist, auf deren Außenfläche das Gehäuse (7) der Heizanordnung angeordnet ist, während die Thermospeicherzelle (2) ein Führungsrohr (9) umfasst, das von einer festen Thermospeichermasse (8) der Thermospeicherzelle umgeben ist, in deren Inneres sich das Schlangenrohr (10) erstreckt, wobei die Heizanordnung (1) in eine durch das Führungsrohr (9) der Thermospeicherzelle (2) definierte Öffnung eingeführt ist.

2. Integrierte Heiz- und Thermospeichereinheit nach Anspruch 1, **dadurch gekennzeichnet, dass** eine Isolierschicht (4) zwischen dem Zentralrohr (3) und der Heizspirale (5) angeordnet ist, die ein Teflon-imprägniertes Glasfasergewebe ist.

3. Integrierte Heiz- und Thermospeichereinheit nach Anspruch 1 oder 2, **dadurch gekennzeichnet, dass** das Innenmaß des Führungsrohrs (9) und das Außenmaß des Gehäuses (7) der Heizanordnung aufeinander abgestimmt sind, um eine Presspassung bereitzustellen.

4. Integrierte Heiz- und Thermospeichereinheit nach einem der Ansprüche 1 bis 3, **dadurch gekennzeichnet, dass** sich zwischen dem Gehäuse (7) der Heizanordnung und dem Führungsrohr (9) ein Schmiermittel befindet, das ein Silikonschmiermittel ist.

5. Integrierte Heiz- und Thermospeichereinheit nach einem der Ansprüche 1 bis 4, **dadurch gekennzeichnet, dass** die Heizspirale (5) eine Metallflachstange ist.

6. Integrierte Heiz- und Thermospeichereinheit nach einem der Ansprüche 1 bis 5, **dadurch gekennzeichnet, dass** das Schlangenrohr (10) ein Metallwellrohr ist.

7. Integrierte Heiz- und Thermospeichereinheit nach einem der Ansprüche 1 bis 6, **dadurch gekennzeichnet, dass** die Thermospeichermasse (6) der Heizanordnung und/oder die Thermospeichermasse (8) der Thermospeicherzelle aus einem Gemisch aus Beton, Kaolinit und Magnesit besteht.

8. Integrierte Heiz- und Thermospeichereinheit nach Anspruch 7, **dadurch gekennzeichnet, dass** die Thermospeichermasse (6) der Heizanordnung und/oder die Thermospeichermasse (8) der Thermospeicherzelle ein Gemisch aus B20- oder B30-Beton in einer Menge von 50 Gew.-% und Kaolinit in einer Menge von 25 Gew.-% und Magnesit in einer Menge von 25 Gew.-% ist.

9. Set integrierter Heiz- und Thermospeicher mit einem Eingang zum Anschluss an den Rücklaufanschluss des Mediumzirkulationssystems und einem Ausgang zum Anschluss an den Versorgungsanschluss des Mediumzirkulationssystems, **dadurch gekennzeichnet, dass** er mindestens zwei miteinander verbundene integrierte Heiz- und Thermospeichereinheiten nach einem der Ansprüche 1 bis 8 umfasst, wobei die integrierten Heiz- und Thermospeichereinheiten in Reihe und/oder parallel geschaltet sind und entsprechend einen Durchflussausgang (11) des Sets, der mit dem Zentralrohr (3) der integrierten Heiz- und Thermospeichereinheit verbunden ist, und einen Akkumulationsausgang (12) des Sets, der mit dem Schlangenrohr (10) der integrierten Heiz- und Thermospeichereinheit verbunden ist, aufweisen, wobei der Durchflussausgang (11) des Sets und der Akkumulationsausgang (12) des Sets so verbunden sind, dass sie einen Ausgang zum Anschluss an den Versorgungsanschluss des Mediumzirkulationssystems bilden, wobei der Eingang des Zentralrohrs (3) der integrierten Heiz- und Thermospeichereinheit ein Eingang zum Anschluss an den Rücklaufanschluss des Mediumzirkulationssystems ist.

10. Set integrierter Heiz- und Thermospeicher nach Anspruch 9, **dadurch gekennzeichnet, dass** in einer Reihenschaltung die Zentralrohre (3) der integrierten Heiz- und Thermospeichereinheiten in Reihe geschaltet sind und die Schlangenrohre (10) der integrierten Heiz- und Thermospeichereinheiten in Reihe geschaltet sind, wobei ein Eingang des Zentralrohrs (3) der ersten integrierten Heiz- und Thermospeichereinheit der Eingang zum Anschluss an den Rücklaufanschluss des Mediumzirkulationssystems ist, während ein Ausgang des Zentralrohrs (3) der letzten integrierten Heiz- und Thermospeichereinheit in zwei Zweige unterteilt ist, wobei der erste Zweig mit einem Eingang des Schlangenrohrs (10) der letzten integrierten Heiz- und Thermospeichereinheit verbunden ist und der zweite Zweig der Durchflussausgang (11) des Sets ist, wobei der Ausgang des Schlangenrohrs (10) der ersten integrierten Heiz- und Thermospeichereinheit der Akkumulationsausgang (12) des Sets ist.

11. Set integrierter Heiz- und Thermospeicher nach Anspruch 9, **dadurch gekennzeichnet, dass** in einer Parallelschaltung die Zentralrohre (3) der integrierten Heiz- und Thermospeichereinheiten parallel geschaltet sind und die Schlangenrohre (10) der integrierten Heiz- und Thermospeichereinheiten parallel geschaltet sind, wobei die Eingänge der Zentralrohre (3) der integrierten Heiz- und Thermospeichereinheiten so verbunden sind, dass sie einen Eingang zum Anschluss an den Rücklaufanschluss des Mediumzirkulationssystems bilden, während die Ausgänge der Zentralrohre (3) der integrierten Heiz- und Thermospeichereinheiten mit einem gemeinsamen Ausgang verbunden sind, der in zwei Zweige unterteilt ist, wobei der erste Zweig mit den Eingängen der verbundenen Schlangenrohre (10) der integrierten Heiz- und Thermospeichereinheiten verbunden ist und der zweite Zweig ein Durchflussausgang (11) des Sets ist, wobei die Ausgänge der Schlangenrohre (10) der integrierten Heiz- und Thermospeichereinheiten verbunden sind und den Akkumulationsausgang (12) des Sets sind.

12. Set integrierter Heiz- und Thermospeicher nach einem der Ansprüche 9 bis 11, **dadurch gekennzeichnet, dass** an dem Durchflussausgang (11) des Sets ein Durchflussventil (13) montiert ist, während an dem Akkumulationsausgang (12) des Sets ein Akkumulationsventil (14) montiert ist, und an dem Eingang des Sets integrierter Heiz- und Thermospeicher ein Eingangsventil (15) montiert ist.

13. Set integrierter Heiz- und Thermospeicher nach Anspruch 12, **dadurch gekennzeichnet, dass** das Durchflussventil (13) und/oder das Akkumulationsventil (14) und/oder das Eingangsventil (15) ein elektronisch gesteuertes Ventil ist.

14. Verfahren zur Steuerung des Sets integrierter Heiz- und Thermospeicher nach einem der Ansprüche 9 bis 13, **dadurch gekennzeichnet, dass** für den Betrieb im Modus der Direktmediumheizung der Durchflussausgang (11) des Sets geöffnet und der Akkumulationsausgang (12) des Sets geschlossen wird, für den Betrieb im Modus der Akkumulationsheizung oder Ladung der Thermospeichermasse (8) der Thermospeicherzelle der Durchflussausgang (11) des Sets geschlossen und der Akkumulationsausgang (12) des Sets geöffnet wird.

15. Verfahren zur Steuerung des Sets integrierter Heiz- und Thermospeicher nach Anspruch 14, **dadurch gekennzeichnet, dass** das Schließen und/oder Öffnen des Durchflussausgangs (11) durch Schließen und/oder Öffnen des Durchflussventils (13) ausgeführt wird, während das Schließen und/oder Öffnen des Akkumulationsausgangs (12) durch Schließen und/oder Öffnen des Akkumulationsventils (14) ausgeführt wird.

## Revendications

1. Unité intégrée de chauffage et de stockage thermique comprenant un ensemble de chauffage (1) et une cellule de stockage thermique (2), **caractérisée en ce que** l'ensemble de chauffage (1) comprend un tuyau central (3), sur la surface extérieure duquel est enroulée une spirale de chauffage (5), qui est entourée par une masse de stockage thermique solide (6) de l'ensemble de chauffage, sur la surface extérieure de laquelle est disposé le boîtier (7) de l'ensemble de chauffage, tandis que la cellule de stockage thermique (2) comprend un tuyau de guidage (9) entouré par une masse de stockage thermique solide (8) de la cellule de stockage thermique, à l'intérieur duquel s'étend le tuyau de bobine (10), l'ensemble de chauffage (1) étant introduit dans une ouverture définie par le tuyau de guidage (9) de la cellule de stockage thermique (2).

2. Unité intégrée de chauffage et de stockage thermique selon la revendication 1, **caractérisée en ce qu'**une couche isolante (4) est disposée entre le tuyau central (3) et la spirale de chauffage (5), constituant une toile cirée en fibre de verre imbibée de Téflon.

3. Unité intégrée de chauffage et de stockage thermique selon la revendication 1 ou 2, **caractérisée en ce que** la dimension intérieure du tuyau de guidage (9) et la dimension extérieure du boîtier (7) de l'ensemble de chauffage sont adaptées pour fournir un ajustement par pression.

4. Unité intégrée de chauffage et de stockage thermique selon l'une quelconque des revendications 1 à 3, **caractérisée en ce qu'**il y a un lubrifiant entre le boîtier (7) de l'ensemble de chauffage et le tuyau de guidage (9), qui est un lubrifiant de silicone.

5. Unité intégrée de chauffage et de stockage thermique selon l'une quelconque des revendications 1 à 4, **caractérisée en ce que** la spirale chauffante (5) est une barre plate métallique.

6. Unité intégrée de chauffage et de stockage thermique selon l'une quelconque des revendications 1 à 5, **caractérisée en ce que** le tuyau de bobine (10) est un tuyau ondulé métallique.

7. Unité intégrée de chauffage et de stockage thermique selon l'une quelconque des revendications 1 à 6, **caractérisée en ce que** la masse de stockage thermique (6) de l'ensemble de chauffage et/ou la masse de stockage thermique (8) de la cellule de stockage thermique est constituée d'un mélange comprenant du béton, de la kaolinite et de la magnésite.

8. Unité intégrée de chauffage et de stockage thermique selon la revendication 7, **caractérisée en ce que** la masse de stockage thermique (6) de l'ensemble de chauffage et/ou la masse de stockage thermique (8) de la cellule de stockage thermique est un mélange de béton B20 ou B30 en la quantité de 50 % en poids et la kaolinite en la quantité de 25 % en poids et la magnésite en la quantité de 25 % en poids.

9. Ensemble d'unités intégrées de chauffage et de stockage thermique, comprenant une entrée pour se connecter au raccordement de retour du système de circulation de fluide et une sortie pour se connecter au raccordement d'alimentation du système de circulation de fluide, **caractérisé en ce que** il comprend au moins deux unités intégrées de chauffage et de stockage thermique, telles que définies dans l'une quelconque des revendications 1 à 8, connectées l'une à l'autre, les unités intégrées de chauffage et de stockage thermique étant connectées en série et/ou en parallèle et ont, de manière correspondante, une sortie de flux (11) de l'ensemble connecté au tuyau central (3) de l'unité intégrée de chauffage et de stockage thermique et une sortie d'accumulation (12) de l'ensemble connecté au tuyau de bobine (10) de l'unité intégrée de chauffage et de stockage dans lequel la sortie de flux (11) de l'ensemble et la sortie d'accumulation (12) de l'ensemble sont connectées pour former une sortie pour se connecter au raccordement d'alimentation du système de circulation de fluide, dans lequel l'entrée du tuyau central (3) de l'unité intégrée de chauffage et de stockage est une entrée pour se connecter au raccordement de retour du système de circulation de fluide.

10. Ensemble d'unités intégrées de chauffage et de stockage thermique selon la revendication 9, **caractérisé en ce que** dans une connexion en série, les tuyaux centraux (3) des unités intégrées de chauffage et de stockage thermique sont connectés en série et les tuyaux de bobine (10) des unités intégrées de chauffage et de stockage thermique sont connectés en série, dans lequel une entrée du tuyau central (3) de la première unité intégrée de chauffage et de stockage thermique est l'entrée pour se connecter au raccordement de retour du système de circulation de fluide, tandis qu'une sortie du tuyau central (3) de la dernière unité intégrée de chauffage et de stockage thermique est divisée en deux branches, la première branche étant reliée à l'entrée du tuyau de bobine (10) de la dernière unité intégrée de chauffage et de stockage thermique, et la seconde branche étant la sortie de flux (11) de l'ensemble, la sortie du tuyau de bobine (10) de la première unité intégrée de chauffage et de stockage thermique étant la sortie d'accumulation (12) de l'ensemble.

11. Ensemble d'unités intégrées de chauffage et de stockage thermique selon la revendication 9, **caractérisé en ce que** dans une connexion en parallèle, les tuyaux centraux (3) des unités intégrées de chauffage et de stockage thermique sont connectés en parallèle et les tuyaux de bobine (10) des unités intégrées de chauffage et de stockage thermique sont connectés en parallèle, dans lequel les entrées des tuyaux centraux (3) des unités intégrées de chauffage et de stockage thermique sont connectées pour former une entrée pour se connecter au raccordement de retour du système de circulation de fluide, tandis que les sorties des tuyaux centraux (3) des unités intégrées de chauffage et de stockage thermique sont connectées à une sortie commune qui est divisée en deux branches, la première branche étant connectée aux entrées des tuyaux de bobine connectés (10) des unités intégrées de chauffage et de stockage thermique, et la seconde branche étant une sortie de flux (11) de l'ensemble, les sorties des tuyaux de bobine (10) des unités intégrées de chauffage et de stockage thermique étant connectées et constituant la sortie d'accumulation (12) de l'ensemble.

12. Ensemble d'unités intégrées de chauffage et de stockage thermique selon l'une quelconque des revendications 9 à 11, **caractérisé en ce qu'**une soupape de flux (13) est montée à la sortie de flux (11) de l'ensemble, tandis qu'une soupape d'accumulation (14) est montée à la sortie d'accumulation (12) de l'ensemble, et une soupape d'entrée (15) est montée à l'entrée de l'ensemble d'unités intégrées de chauffage et de stockage thermique.

13. Ensemble d'unités intégrées de chauffage et de stockage thermique selon la revendication 12, **caractérisé en ce que** la soupape de flux (13) et/ou la soupape d'accumulation (14) et/ou la soupape d'entrée (15) est une soupape commandée électroniquement.

14. Procédé de commande de l'ensemble d'unités intégrées de chauffage et de stockage thermique selon l'une quelconque des revendications 9 à 13, **caractérisé en ce que** pour un fonctionnement en mode de chauffage direct du fluide, la sortie de flux (11) de l'ensemble est ouverte et la sortie d'accumulation (12) de l'ensemble est fermée, pour un fonctionnement en mode d'accumulation chauffant ou chargeant la masse de stockage thermique (8) de la cellule de stockage thermique, la sortie de flux (11) de l'ensemble est fermée et la sortie d'accumulation (12) de l'ensemble est ouverte.

15. Procédé de commande de l'ensemble d'unités intégrées de chauffage et de stockage thermique selon la revendication 14, **caractérisé en ce que** la fermeture et/ou l'ouverture de la sortie de flux (11) est réalisée par la fermeture et/ou l'ouverture de la soupape de flux (13), tandis que la fermeture et/ou l'ouverture de la sortie d'accumulation (12) est réalisée par la fermeture et/ou l'ouverture de la soupape d'accumulation (14).
